Europäisches Patentamt

European Patent Office

Office européen des brevets

(19)

(11) Veröffentlichungsnummer: **0 140 393**
**A2**

(12) # EUROPÄISCHE PATENTANMELDUNG

(21) Anmeldenummer: 84200729.6

(22) Anmeldetag: 06.03.81

(51) Int. Cl.⁴: **B 65 G 1/06**
**B 65 G 47/57**

(30) Priorität: 06.03.80 NL 8001352
11.08.80 NL 8004549

(43) Veröffentlichungstag der Anmeldung:
08.05.85 Patentblatt 85/19

(84) Benannte Vertragsstaaten:
AT BE CH DE FR GB IT LI LU NL SE

(60) Veröffentlichungsnummer der früheren
Anmeldung nach Art. 76 EPÜ: 0 035 818

(71) Anmelder: Technisch Ontwikkelingsbureau van Elten
B.V.
Baron van Nagellstraat 174
NL-3700 AA Barneveld(NL)

(72) Erfinder: van Elten, Gerrit Jan
Tromplaan 1
NL-3781 TC Voorthuizen(NL)

(72) Erfinder: Hurkmans, Antonius
Prof. Buyslaan 71
NL-3741 DB Baarn(NL)

(72) Erfinder: de Vries, Hugo Victor
Hamburgerweg 144
NL-3851 EP Ermelo(NL)

(74) Vertreter: Kooy, Leendert Willem et al,
OCTROOIBUREAU VRIESENDORP & GAADE P.O. Box
266
NL-2501 AW The Hague(NL)

(54) Hebevorrichtung.

(57) Hebevorrichtung (9, 12) für eine Lagerungsvorrichtung für Produkten (7) bestehend aus einer Stellage (2) mit nebeneinander und übereinander angeordneten Etageförderen (5), einer oder mehreren die Stellage (2) entlang fahrbaren Hebevorrichtungen (9) an der Zufuhrseite und einer oder mehreren die Stellage (2) entlang fahrbaren Hebevorrichtungen (12) an der Entnahmeseite der Stellage (2).

Gemäss der Erfindung haben die Zufuhrhebevorrichtungen (9) und/oder die Entnahmehebevorrichtungen (12) für die Produkten (7) eine kontinuierliche Transportwirkung gemäss dem Paternoster-Prinzip.

./...

EP 0 140 393 A2

FIG.1

- 1 -

HEBEVORRICHTUNG

Die Erfindung bezieht sich auf eine Hebevorrichtung die in Lagerungsvorrichtungen für Produkte angewandt wird, bestehend aus einer Stellage, auf welche in Schichten übereinander eine Anzahl Etageförderer nebeneinander aufgestellt worden sind, auf welche die Produkte gelagert werden und über welche diese Produkte transportiert werden können während der Zufuhr oder der Entnahme dieser Produkte, wobei an der Zufuhrseite der Etageförderer ein oder mehrere Produktzufuhrförderer und eine oder mehrere die Stellage entlang fahrbaren Hebevorrichtungen angeordnet worden sind, welche die Produkte von den Zufuhrförderern übernehmen und in vertikaler Richtung transportieren bis vor einem der Etageförderer und wobei an der Entnahmeseite der Etageförderer ein oder mehrere Produktentnahmeförderer und eine oder mehrere die Stellage entlang fahrbaren Hebevorrichtungen angeordnet worden sind, welche die Produkte von den Etageförderern übernehmen und in vertikaler Richtung transportieren bis auf einen der Entnahmeförderer.

Derartige Lagerungsvorrichtungen sind bekannt und werden benutzt zur Lagerung von auf Tragbrettern, Ladebrettern oder Paletten liegenden Produkten. Diese beladenen Paletten haben einen bedeutenden Gewicht, an dem die Konstruktion und der Prinzip der benutzten Hebevorrichtungen angepasst worden sind. Die Frequenz mit der die Paletten zugeführt oder wieder entnommen werden, ist ziemlich niedrich, wofür eine einfache nicht-kontinuierliche Hebewirkung genügt, wobei die Zeiteperioden benötigt sind zum Sinken des Liftplattforms, zum Überbringen in den Aufzug, zum Heben und zum Überschieben der Palette bis auf den Etageförderer, nacheinander durchlaufen werden müssen, was eine niedrige Verarbeitungsfrequenz mit sich bringt.

Die Lagerung auf Paletten hat aber in viele Fälle grosse Nachteile, mit Rücksicht auf das Sammeln der auf den Paletten liegenden grossen Mengen Produkte einer Sorte zu Aufträgen verschiedener Sorte. Die Aufträge bestehen nämlich in den meisten Fälle aus ein Sortiment Einheiten (Trays, Kisten oder Kasten) mit 2 bis 12 oder 20 Flaschen oder Kastenverpackungen einer Sorte. Ausserdem sind die Paletten ein grossen Kosten-posten, gehen verloren, beschädigen und liegen im wege wenn sie leer sind. Dieses Sammeln zu die Aufträgen, bestehend aus Einheiten, wird bedeutend erleichtert wenn die Produkte nicht auf Paletten auf die Etageförderer gelagert werden, sondern als Einheiten, wobei also keine Paletten benutzt werden. Dies impliziert dass die Verarbeitungsfrequenz der Einheiten sehr viel höher liegen soll als der Fall ist bei Paletten, welche Anforderung die bis jetzt benutzten Hebevorrichtungen allerdings nicht erfüllen können.

Die Hebevorrichtung gemäss der Erfindung unterscheidet sich hinsichtlich der bestehenden Hebevorrichtungen dadurch dass eine Hebevorrichtung gemäss dem bekannten Paternoster-System mit ein in Höhe verstellbares Übergabe- oder Übernahmegerät angewandt wird und wobei ein Übergabe- oder Übernahmegerät einer Antriebsvorrichtung für den Antrieb der Lagerbahnen ist vorgesehen.

Dabei wird in dem steigenden Teil der Zufuhrhebevorrichtung eine fertigliegende Einheit, (Lattenkiste oder Milchkasten u.d.) aufge-

nommen und im herabgehenden Teil auf das Übergabegerät wieder abgesetzt in der Ebene eines Etageförderers, welcher gefüllt wird und wobei im steigenden Teil einer Entnahmehebevorrichtung eine von dem Etageförderer kommenden Einheit aufgenommen wird und in dem herabgehenden Teil wieder abgesetzt bis auf einen der Entnahmeförderer. Der vertikale Transport verläuft kontinuierlich. Die für diesen Transport benötigte Zeit fällt ausserhalb der Zeit welche benötigt ist zum Fertigstellen. Herabsetzen und Weitertransportieren des Produktes. Hierdurch steigert sich die Frequenz von Transport der Einheiten sehr bedeutend, was notwendig ist wenn man die einzelnen Einheiten lagern will und keine Hilfsmittel wie Paletten benutzen will.

Die Erfindung wird an Hand der Zeichnung und mit einem Ausführungsbeispiel näher erläutert werden.

Figur 1 ist eine perspektivische Ansicht der Lagerungsvorrichtung nach der Erfindung.
Figur 2 ist ein teilweiser senkrechter Querschnitt und eine teilweise Seitenansicht der als Paternosterlift ausgeführten Zufuhrhebeeinrichtung.
Figur 3 ist ein teilweiser Querschnitt und eine teilweise Obenansicht des Paternosterliftes nach Figur 2, sowie der Übergabevorrichtungen der Träger mit den Produkten von den Zufuhrförderern in die Zufuhrhebeeinrichtung und aus der Zufuhrhebeeinrichtung in die Stellage.

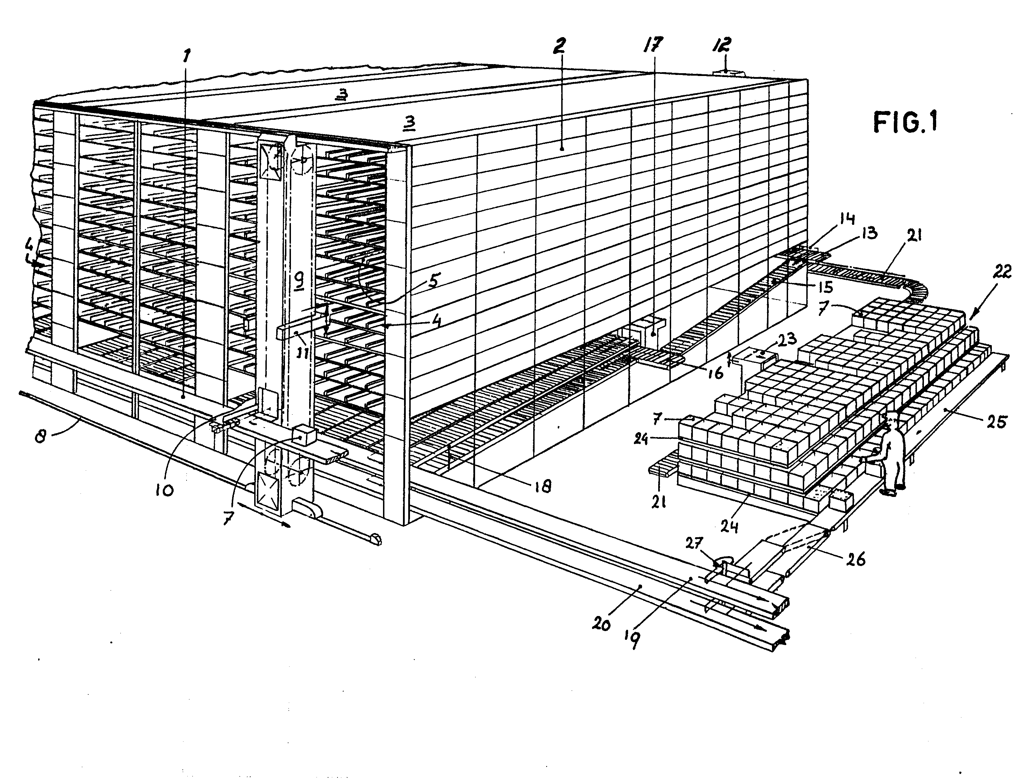

Die Kasten, welche mit vollen Flaschen oder anderen Verpackungen gefüllt worden sind, werden von den Produktionseinheiten aus, mittels eines oder mehrerer Zufuhrförderer 1 zu der Lagerungsstellage 2 zugeführt. Dabei kann die Anzahl Zufuhrförderer 1 gleich sein an die Anzahl Produktionseinheiten, welche nicht in Figur 1 gezeichnet worden sind.

Die Lagerungsstellage 2, die in Figur 1 gezeichnet worden ist, besteht aus einer Anzahl, zum Beispiel sieben, nebeneinander stehenden Fächern 3, die in senkrechter Richtung unterteilt worden sind in eine Anzahl, zum Beispiel dreizehn, Schichten. In jeder Schicht 4 liegen zum Beispiel acht Etageförderer 5 nebeneinander, die in üblicher Weise mittels Tragbalken der Stellage 2 unterstützt worden sind. In jedem Etageförderer können zum Beispiel fünfzig gefüllte Kasten 7 gelagert werden.

Gemäss der Erfindung sind an der Zufuhrseite der Stellage auf Schienen 8 ein oder mehrere Paternosteraufzüge 9 fahrbar, wobei jeder Aufzug 9 im Prinzip über die ganze Länge der Stellage 2 fahrbar ist und positioniert werden kann vor jeder senkrechten Reihe Schrittförderer 5. Vorzugsweise ist die Anzahl Aufzüge 9 gleich an die Anzahl Zufuhrförderer 1.

Auf der Höhe des Zufuhrförderers 1 ist fest auf dem Rahmen des Aufzuges 9 eine hervorragenden Teil 2 montiert worden, an der die Vorrichtung 10 montiert worden ist. Auf dem Rahmen 29 ist ein hydraulischer oder pneumatischer Zylinder 30 oder eine andere Schubvorrichtung montiert worden, sowie zwei neigende Rollenbahnen 31 und 32. Der Kasten 7 kommt gegen den Rahmen 29 zum Stillstand und wird mit Hilfe des Zylinders 30 auf die Rollenbahn 31 geschoben und von daraus mittels der Schwerkraft auf die Rollenbahn 32 bis gegen einen Anschlag 33 transportiert.

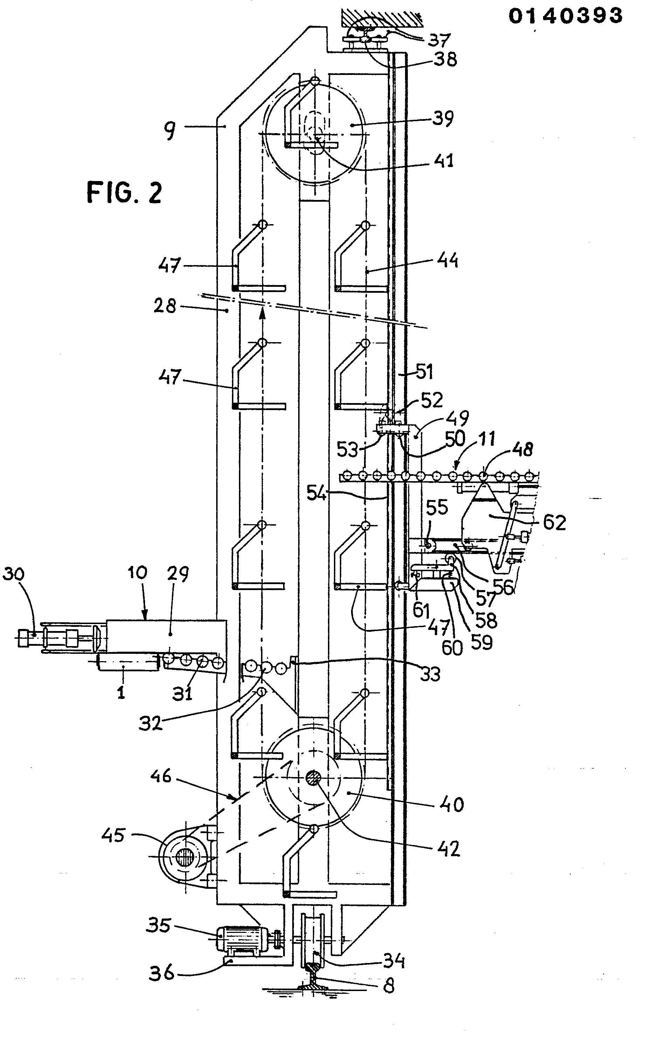

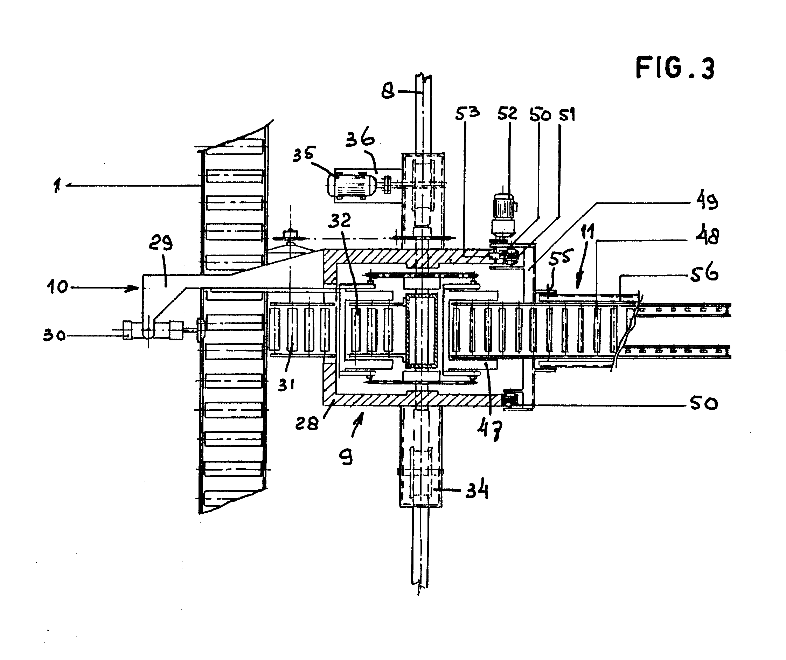

Der Zufuhraufzug 9 ist über die Schienen 8 die Stellage entlang fahrbar mittels zwei oder mehrerer Laufräder 34, die angetrieben werden durch eine Elektromotor 35 auf einer Konsole 36, die fest an das Gehäuse befestigt worden ist. Der Zufuhraufzug ist an der Oberseite mittels zwei Leiträder 37 auf einer Schiene 38 unterstützt. In dem Gehäuse 28 des Aufzuges 9 ist an der Oberseite und der Unterseite ein Paar Kettenräder 39 bzw. 40 drehbar unterstützt auf Wellen 41 bzw. 42, wovon die obere Welle 41 in Höhenrichtung verstellbar ist. Über die Kettenräder 39 und 40 laufen zwei endlose Ketten 43 und 44, die mit der oberen verstellbaren Welle 41 gespannt werden können. Die Ketten 43 und 44 werden in der Richtung der in Figur 2 gezeichneten Pfeile durch einen Elektromotor 45 und einen Ketten- oder Riemenantrieb 46 angetrieben. Auf den Ketten 43 und 44 sind Tragschaukeln 47 gehängt worden, womit der Kasten 7 von der Rollenbahn 32 übergenommen wird. Die Schaukeln 47 setzen die Kasten 7 ab auf einen Förderer 48 der Übertragungsvorrichtung 11 gemäss Figur 2 und 3, welcher die Kasten von der Wirkungssphäre der Schaukeln 47 aus transportiert bis innerhalb des Bereiches der Wirkungssphäre des Transportbalkens des TragSchrittförderers 5. Das in vertikaler Richtung Verstellen der Antriebsvorrichtung 11 wird ermöglicht indem diese einen Heberahmen 49 aufweist, der mit Leiträdern 50 versehen ist, welche über Schienen 51 laufen, die an den Rahmen 28 des Zufuhraufzuges 9 befestigt worden sind. An der Oberseite des Heberahmens 49 ist ein Elektromotor 52 montiert worden, der mittels eines Ritzels 53 und eine Zahnstange 54 den Heberahmen 49 den Aufzug 9 entlang hinauf und herunter verstellen kann. Zur Kompensation eventueller Abweichungen in der richtigen Höhe der Antriebvorrichtung 11 sind der Rollenförderer 48 und ein Antrieb- und Kuppelmechanismus scharnierbar an den Heberahmen 49 befestigt worden. Auf den Heberahmen 49 ist scharnierbar um eine Welle 55 ein Tragrahmen 56 montiert worden, der federnd unterstützt ist mittels einer Rolle 57 auf einem Hebel 58, der scharnierbar auf einer Konsole 59 an dem Heberahmen 49 ist und unter der Rolle mittels einer Feder 60 auf der Konsole 59 unterstützt ist, während der Hebel mittels der Feder 60 am anderen Ende auf einen Anschlag 61 gedrückt wird.

An diese Übertragungsvorrichtung 11 ist ein Antrieb- und Kuppelmechanismus 62 (siehe Figur 2) montiert worden, womit der Transportbalken des Trag-Schrittförderers angetrieben werden kann.

Als Antriebmechanismus kann zum Beispiel ein durch einen hydraulischen oder Elektromotor angetriebenen Kurbelgetriebemechanismus angewandt werden, dessen Konstruktion wohl bekannt ist und deshalb hier nicht näher erläutert zu werden braucht.

An der Entnahmeseite der Lagerungsstellage 2 befinden sich eine oder mehrere Entnahmehebevorrichtungen in Form von fahrbaren Paternosteraufzüge 12, die in derselben Weise ausgeführt worden sind als die Paternosteraufzüge/9 an der Zufuhrseite. Diese Aufzüge 12 sind versehen mit einer in vertikaler Richtung verstellbaren Kastenübernahmevorrichtung (nicht gezeichnet). Auch diese Kastenübernahmevorrichtungen sind mit einem Antrieb- und Kuppelmechanismus versehen um den Transportbalken des bezüglichen Schrittförderers von der Entnahmeseite ab antreiben zu können.

Die Ausführung des Antrieb- und Kuppelmechanismus an der Entnahmeseite ist identisch mit der an der Zufuhrseite. Mit Hilfe der nicht gezeichneten Kastenübernahmevorrichtung mit Antrieb- und Kuppelmechanismus können die Kasten 7 aus den Förderern 5 in den Aufzug 12 übergebracht werden, der in umgekehrter Richtung wirkt hinsichtlich des Aufzuges 9 und der die Kasten von der Übernahmevorrichtung übernimmt und auf eine nicht gezeichnete Übergabevorrichtung absetzt, welcher in dergleicher Weise konstruiert worden ist als die Vorrichtung 10 nach den Figuren 2 und 3, aber in umgekehrter Richtung wirkt und welcher die Kasten 7 aus dem Aufzug 12 auf einen ersten Entnahmeförderer 13 überbringt, dessen Konstruktion mit derjenigen des Zufuhrförderers 1 übereinstimmt.

Falls die Entnahmeaufzüge 12 nur benutzt werden für das Sammeln von Aufträgen, werden die auf den Förderer 13 abgesetzte Kasten weitertransportiert zur Distribution. Eine Auftragssammeleinrichtung 18 ist denn nicht notwendig.

Falls jedoch eine schnellere Methode von Auftragssammlung notwendig ist, werden die Kasten 7 mittels einer Überschiebeeinrichtung 14 auf einen neigenden Förderer 15 übergebracht, der die Kasten 7 auf einen Verteilförderer 16 absetzt, der an seiner Reihe die Kasten 7 bis zu einem Überschieber 17 transportiert. Der Kastenüberschieber 17 setzt die Kasten 7 auf einen der Kastenpufferbahnen 18. Jede Pufferbahn 18 ist bestimmt für das zeiweilige Lagern einer Anzahl Kasten 7, welche gefüllt sind mit nur einer Produktsorte. Nach Figur 1 sind zwei Schichten von nebeneinander angeordneten Pufferbahnen 18 angewandt, aber selbstverständlich können, falls notwendig, mehr als zwei übereinander liegenden Schichten von Pufferbahnen 18 angewandt werden. Die Anzahl Pufferbahnen 18 in jeder Schicht ist gleich an die Anzahl Produktsorten, die abgeliefert werden muss. Vorzugsweise sind die Pufferbahnen 18 unter der Lagerungsstellage 2 angeordnet, um die benötigte Bodenfläche für die Lagerungsvorrichtung so klein wie möglich zu halten. Die Pufferbahnen 18 sind vorzugsweise als neigend aufgestellte Rollenbahnen ausgeführt worden, worauf die Kasten 7 durch die Schwerkraft zum untersten Ende der Bahn rollen und ins Stocken geraten gegen einen nicht gezeichneten Anschlag oder gegen einen vorhergehenden Kasten. Am Ende jeder Pufferbahn 18 ist ein Übergabemechanismus (nicht gezeichnet) montiert worden, der die Kasten von der Bahn 18 auf eine der Auftragssammelbahnen 19 und 20, die bestehen aus angetriebenen Rollenförderern, überbringt. Auf den Auftragssammelbahnen 19 und 20 können die für einen Auftrag benötigten Kasten gesammelt und in Pfeilrichtung für weitere Abhandelung weitertransportiert werden. Dadurch dass mehrere Schichten Pufferbahnen übereinander angeordnet worden sind, wobei jede Schicht einen eigenen Auftragssammelförderer besitzt, können die Kasten für mehrere Aufträge gleichzeitig gesammelt werden.

Die oben umschriebene Wirkung der Installation ist gemeint für Einheiten, zum Beispiel Kasten, die eine ziemlich grosse Umsatzgeschwindigkeit haben (sogenannte "Schnellläufer"). Die Pufferbahnen 18 mit Überbringern und die Auftragssammelbahnen 19 und 20 ermöglichen es um Aufträge, bestehend aus diesen Schnellläufern schnell sammeln zu können. Der Puffervorrat dieser Kasten kann gross sein in Hinsicht auf die Anzahl benötigter Auftragssammel-bahnen. Über diese Pufferbahnen werden verhältnismässig viele Kasten verarbeitet.

Die Sache liegt anders mit den Kasten mit einer kleinen Umsatzgeschwindigkeit (sogenannte "Langsamläufer"). Die Verschiedenheit der in diesen Trägern oder Kasten anwesenden Artikel kann in einigen Fällen sehr gross sein. Nehmen wir als Beispiel fünfzehnhundert verschiedene Artikel oder Verpackungen wovon zum Beispiel zweihundert Schnellläufer und dreizehnhundert Langsamläufer. Wenn diese Artikel in derselben Weise behandelt werden würden als die Schnellläufer, so würden insgesamt fünfzehnhundert Pufferbahnen 18 nebeneinander benötigt sein. Die Produktionslagerung dagegen würde in Hinsicht auf die grosse Anzahl Pufferbahnen klein sein. Die Sammelfrequenz der Langsamläufer ist sehr niedrig. Hierdurch ist für diese Artikel ein anderes Verfahren möglich. Die Auftragssammelvorrichtung 18 kann verteilt werden in einem Teil, bestimmt für die "Schnellläufer" und in einem Teil, bestimmt für die "Langsamläufer".

In dem Teil, bestimmt für die Langsamläufer, werden die Pufferbahnen 18 jetzt benützt um Teilaufträge, bestehend aus Langsamläufern, aufzunehmen. Gibt es zum Beispiel fünfzig Pufferbahnen, dann nehmen die Aufzüge 12 für fünfzig Aufträge die Artikel aus der Lagerung und zwar Artikel nach Artikel. Die Anzahl Einheiten eines Artikels wird übergebracht zu und verteilt über den fünfzig Pufferbahnen, wobei ein Komputer die Anzahl Einheiten bestimmt, welche an die bestimmten Bahnen zugeführt wird. In dieser Weise werden auf den Pufferbahnen bereits Teilaufträge zusammengesetzt.

Sind alle, für die fünfzig Aufträge benötigten Artikel übergebracht worden, dann liegen fünfzig Teilaufträge fertig, um zu dienen als Ergänzung zu den Schnellläufern. Die Teilaufträge müssen also auf den Pufferbahnen 18 fertig liegen, bevor das Zusammensetzen der Aufträge anfängt. Die Aufzüge 12 können erst wieder mit dem Zusammensetzen der nächsten fünfzig Teilaufträge anfangen, wenn die vorhergehenden Teilaufträge alle abgeliefert worden sind. Dies würde bedeuten, dass das Zusammensetzen der Restaufträge warten müsste, bis die Aufzüge 12 wieder aufs neue die nächsten fünfzig Teilaufträge zusammengesetzt haben.

Um diese Diskontinuität vorzubeugen, können entweder (a) die fünfzig Pufferbahnen 18 für die Langsamläufer in doppelter Anzahl (= hundert) ausgeführt werden und abwechselnd benutzt werden oder (b) fünfzig Pufferbahnen in der Mitte versehen sein mit (nicht angegebenen) Gegenhälter oder "Sperren". Während der Zusammensetzung der Aufträge laufen die Kasten gegen diese Sperren.

Sind die Teilaufträge zusammengesetzt worden, dann werden diese fünfzig Aufträge alle gleichzeitig durchgelassen zu der zweiten Hälfte der Pufferbahnen, wonach die Sperren oder Gegenhälter wieder hochgehen. Die durchgelassenen Aufträge sind dann fertig für die Komplettierung, während die Aufzüge 12 sofort anfangen können mit der Zusammensetzung der nächsten Teilaufträge auf der ersten Hälfte der Pufferbahnen 18.

Weil die Aufzüge 12 für die Zusammensetzung der Teilaufträge häufig fahren müssen und die Übergabevorrichtung sehr oft in Höhe verstellt werden muss, geht die Zusammensetzung der Teilaufträge langsamer als die Überbringung der Schnellläufer mittels Pufferbahnen mit Übergabevorrichtungen. Weil jedoch nur wenige Einheiten pro Zeiteinheit übergebracht zu werden brauchen, kann dieses System für die Langsamläufer angewandt werden. Das Sammeln mittels des Entnahmeaufzuges und das Lagern eines Teilauftrags auf die Rollenbahnen erspart erheblich auf die Anzahl benötigter Rollenbahnen. Die Anzahl benötigter Pufferbahnen für Langsamläufer würde zum Beispiel fünfzig sein können, so dass auch fünfzig Teilaufträge fertig liegen zur Ergänzung. Für die Zusammensetzung von Aufträgen in der uniformen Weise würden fünfzehnhundert Rollenbahnen benötigt sein, wovon die meisten dann nur ab und zu eine Einheit durchlassen würden. Bei der getrennten Arbeitsweise sind für die Schnellläufer zum Beispiel etwa zweihundert Rollenbahnen benötigt und für die Langsamläufer die angenommenen fünfzig. sodass die Ersparung an Rollenbahnen erheblich ist.

Für einige umfangreichen Teilaufträge kann gelegentlich mehr als eine Pufferbahn benützt werden. In der oben umschriebenen Weise ist es wirtschaftlich möglich um Aufträge, bestehend aus Schnellläufern und Langsamläufern automatisch und komputergesteuert zusammenzusetzen.

Das von Hand Komplettieren von automatisch zusammengesetzten Aufträgen von Einheiten mit einer hohen Umsatzgeschwindigkeit mit Einheiten mit einer geringen Umsatzgeschwindigkeit würde zur Folge haben, dass die Verwaltung aufgeteilt werden müsste in einem automatischen und einem nicht automatischen Teil. Dies würde viele Kontrolle- und Verwaltungshandlungen implizieren. Die Verwaltungskosten würden dann unverhältnismässig steigen. Man soll danach streben, die Gesamtaufträge so viel wie möglich automatisiert und komputergesteuert zusammenzusetzen, was gemäss der hieroben beschriebenen Arbeitsweise möglich ist. Wo genau die Scheidung gezogen werden soll zwischen die Langsamläufer auf die Schnellläufer hängt ab von vielen Faktoren, die teilweise erst richtig in der Praxis beurteilt werden können. Glücklicherweise ist es so, dass die mechanische Ausführung der Installation nach beiden Systemen fast gleich ist. Laut (a) sind diese sogar ganz gleich. Der Unterschied besteht nur in der Steuerung. Das nachträgliche Ändern der Scheidungslinie ist denn auch ohne viele Umstände möglich.

Die obenbeschriebene (nicht gezeichnete) Überbringvorrichtung der Entnahmeaufzüge 12 kann die Kasten aus den Aufzügen überbringen auf einen zweiten Entnahmeförderer 21, die die Kasten 7 zu einer Einheitensammelstation 22 zuführt. Die Kasten 7 werden mittels einer Überbringvorrichtung 23 übergebracht auf eine der Bahnen 24 der Einheitensammelstation 22 (flow-rack). Diese Bahnen 24 liegen nebeneinander in einer Anzahl übereinander liegender Schichten, wobei die Anzahl Bahnen 24 mindestens gleich ist an die Anzahl Produktsorten. Die Bahnen 24 bestehen aus neigenden Rollenbahnen, worauf die Kasten 7 durch die Schwerkraft nach vorne transportiert werden bis gegen einen Anschlag. Die in der Station 22 gelagerten Kasten sind homogene Kasten, wobei jeder Kasten eine Produktsorte enthält.

An der Vorderseite der Station 22 ist ein Förderer 25 angeordnet worden. Auf der Station 22 kann ein Bedienungsmann einen leeren Kasten mit den für den diesbezüglichen Auftrag benötigten Anzahlen Verpackungseinheiten verschiedener Produkte füllen. Dabei kann ein Kasten zum Beispiel gefüllt werden mit einer Anzahl Flaschen Milch, einer Anzahl Flaschen Krem, einer Anzahl Flaschen Joghurt usw. Der Bedienungsmann stellt den gefüllten heterogenen Kasten mit verschiedenen Produkten auf den Förderer 25, der den Kasten über eine Weiche 26 und ein Tor 27 zu einem der Auftragsammelförderer 19 und 20 transportieren kann, wo der Kasten dem diesbezüglichen Auftrag hinzugefügt werden kann. In der Einheitensammelstation 22 können Displays angebracht sein, worauf die für jeden Auftrag benötigten Verpackungseinheiten angegeben worden sind. Dies erleichtert das Zusammensetzen der Kasten mit verschiedenen Produkten.

Die oben beschriebene Lagerungsvorrichtung kann mittels eines Komputers gesteuert werden, der den Beginn- und Endpunkt der Wirkung der verschiedenen Förderer, Antrieb-, Überbring- und Übersetzvorrichtungen bestimmt und ausserdem die Reihenfolge der Wirkung dieser Einrichtungen steuert, alles in Abhängigkeit der Reihenfolge und der Grösse der Aufträge für verschiedene Produkte.

-1-

ANSPRÜCHE:

1. Hebevorrichtung (9, 12) für Produkte angewandt in einer Lagerungsvorrichtung bestehend aus einer Stellage (2), auf welche in Schichten (4) übereinander eine Anzahl Etageförderer (5) nebeneinander aufgestellt worden sind, auf welche die Produkte (7) gelagert werden und über welche diese Produkte (7) transportiert werden können während der Zufuhr oder der Entnahme dieser Produkte (7), wobei an der Zufuhrseite der Etageförderer (5) ein oder mehrere Produktzufuhrförderer (1) und eine oder mehrere die Stellage entlang fahrbaren Hebevorrichtungen (9) angeordnet worden sind, welche die Produkte (7) von den Zufuhrförderern (1) übernehmen und in vertikaler Richtung transportieren bis vor einem der Etageförderer (5) und wobei an der Entnahmeseite der Etageförderer (5) ein oder mehrere Produktentnahmeförderer und eine oder mehrere die Stellage entlang fahrbaren Hebevorrichtungen (12) angeordnet worden sind, welche die Produkte (7) von den Etageförderern (5) übernehmen und in vertikaler Richtung transportieren bis auf einen der Entnahmeförderer (13), dadurch gekennzeichnet, dass die Zufuhrhebevorrichtungen (9) und/oder die Entnahmehebevorrichtungen (12) für die Produkten (7) eine kontinuierliche Transportwirkung haben gemäss dem Paternoster-Prinzip.

2. Hebevorrichtung nach Anspruch 1, dadurch gekennzeichnet dass die Produkte Verkaufseinheiten (7) sind.

3. Hebevorrichtung nach Anspruch 1, dadurch gekennzeichnet, dass in der Zufuhrhebevorrichtung (9) oder in der Entnahmehebevorrichtung (12) eine höhenverstellbare Übergabe- bzw. Übernahmevorrichtung (11) mit Antriebsvorrichtung (62) angeordnet ist, welche sorgt für den Transport der zu lagernden Produkte (7) in oder aus der Lagerung (2).

4. Hebevorrichtung nach Anspruch 1, dadurch gekennzeichnet, dass sowohl die Zufuhrhebevorrichtung (9) als die Entnahmehebevorrichtung (12) beide mit einer höhenverstellbaren Übergabe- bzw. Übernahmevorrichtung (1) mit Antriebsvorrichtung (62) versehen sind.

5. Hebevorrichtung nach Anspruch 1, dadurch gekennzeichnet, dass die Antriebsvorrichtung (62) gekoppelt werden kann mit dem Schrittförderer (5).

tD/HH/LvdM

FIG.1

1/3

0140393

0140393

FIG. 2

FIG.3

0140393